(19) Europäisches Patentamt
European Patent Office
Office européen des brevets

(11) EP 2 077 462 A1

(12) EUROPEAN PATENT APPLICATION
published in accordance with Art. 153(4) EPC

(43) Date of publication:
08.07.2009 Bulletin 2009/28

(51) Int Cl.:
G02B 21/36 (2006.01)          G02B 21/24 (2006.01)
G06T 5/20 (2006.01)           H04N 5/225 (2006.01)

(21) Application number: 07827930.4

(22) Date of filing: 22.10.2007

(86) International application number:
PCT/JP2007/001151

(87) International publication number:
WO 2008/050482 (02.05.2008 Gazette 2008/18)

(84) Designated Contracting States:
AT BE BG CH CY CZ DE DK EE ES FI FR GB GR
HU IE IS IT LI LT LU LV MC MT NL PL PT RO SE
SI SK TR

(30) Priority: 25.10.2006  JP 2006290070

(71) Applicant: Nikon Corporation
Chiyoda-ku
Tokyo 100-8331 (JP)

(72) Inventor: SHIBATA, Hiromasa
Tokyo 100-8331 (JP)

(74) Representative: Petzold, Silke et al
RGC Jenkins & Co
26 Caxton Street
London SW1H 0RJ (GB)

(54) MICROSCOPIC DEVICE AND MICROSCOPIC IMAGE ANALYSIS METHOD

(57) To provide a microscope device capable of resolving a microscopic pattern beyond optical resolution of the microscope device, and a resolution inspection method of a microscope image using the microscope device.

A microscope device includes, an image sensor having a plurality of pixels, an enlarging optical system forming a magnified image of at least part of a target of observation on the pixels of the image sensor, and an image processor applying an edge enhance filter having a differential function to a pictorial image obtained by the image sensor to obtain an edge enhanced pictorial image corresponding to the pictorial image, wherein the enlarging optical system includes a variable magnification optical system forming an image of a linear pattern included in an observation area on a surface of the target of observation, as the image having a width that exceeds a size of each of the pixels forming the image sensor and that is equal to or less than a width of an area handled by the edge enhance filter.

Fig. 1

## Description

## TECHNICAL FIELD

The present invention relates to a microscope device forming a magnified image on a photoelectric transferring surface of an image sensor to provide the magnified image for observation, and relates to a resolution inspection method of a microscope image using the microscope device.

## BACKGROUND ART

In semiconductor manufacturing processes and in an inspection stage of semiconductor products, in order to detect an imperceptible defect or the like, a microscopic pattern formed on a wafer or the like is observed by a microscopic inspection apparatus which uses a high-resolution microscope device.

Generally, resolution R in a microscope device for semiconductor wafer observation is limited to a value given by a Rayleigh limit of optical resolution which is represented by an expression (1) by using wavelength l, a constant k, and numerical aperture NA of an objective lens.

$$R = k \times l/NA \quad \dots (1)$$

Therefore, in order to enable the observation of a microscopic pattern formed on a wafer which is becoming more and more miniaturized, resolution improvement of a microscope device has been attempted by the use of short-wavelength ultraviolet light as a light source. For example, in a microscope device using an objective lens with NA = 0.9 and using ultraviolet light with a 248 nm wavelength, resolution R concerning two points on an observed surface is calculated as resolution R = 168 nm when constant k = 0.61 is substituted in the above expression (1).

## DISCLOSURE OF THE INVENTION

## PROBLEMS TO BE SOLVED BY THE INVENTION

With the conventional microscope device as described above, it is only possible to observe a circuit pattern in which an interval between lines forming the individual circuit pattern is, at best, about optical resolution R of a microscope.

Therefore, in order to cope with a finer microscopic pattern, it is necessary to apply a technique that costs extremely high, such as further shortening the wavelength of the light source and increasing NA of the objective lens by using the immersion method or the like.

It is a preposition of the present invention to provide a microscope device capable of resolving a microscopic pattern beyond optical resolution of the microscope device and a resolution method of a microscope image using the microscope device.

## MEANS FOR SOLVING THE PROBLEMS

The principle of a first microscope device according to the present invention is as follows.

An image sensor has a plurality of pixels. An enlarging optical system forms a magnified image of at least part of a target of observation on the pixels of the image sensor. An image processor applies an edge enhance filter having a differential function to a pictorial image obtained by the image sensor to obtain an edge enhanced pictorial image corresponding to the pictorial image. In the enlarging optical system, a variable magnification optical system forms an image of a linear pattern included in an observation area of the target of observation as the image having a width that exceeds a size of each of the pixels included in the image sensor and that is equal to or less than a width of an area handled by the edge enhance filter.

The principle of a second microscope device according to the present invention is as follows.

In the above-described microscope device, the variable magnification optical system forms an image of the linear pattern included in the observation area on the image sensor as the image having a width corresponding to two pixels or more.

The principle of a third microscope device according to the present invention is as follows.

In the above mentioned microscope device, the image processor applies the edge enhance filter having an effect of reflecting distribution of pixel values in the pictorial image as well as having the differential function to the pictorial image obtained by the image sensor.

The principle of a fourth microscope device according to the present invention is as follows.

In the above-described microscope device, the image processor includes an averaging processor averaging results of enhancement by the edge enhance filter by using an averaging matrix which is smaller in size than a matrix for the edge enhance filter.

The principle of a first resolution method of a microscope image according to the present invention is as follows.

A magnified image forming procedure forming a magnified image of at least part of a target of observation, on a photoelectric transferring surface of an image sensor on which a plurality of photoelectric transferring elements are disposed by an enlarging optical system. An image processing procedure applies an edge enhance filer having a differential function to a pictorial image obtained by the image sensor to obtain an edge enhanced pictorial image corresponding to the pictorial image. In the magnified image forming procedure includes a variable magnification procedure forming an image of a linear pattern included in an observation area of the target of observation as the image having a width that exceeds a size of each of pixels corresponding to the photoelectric transferring elements included in the image sensor and that is equal to or less than a width of an area handled by the edge enhance filter.

A second resolution method of the microscope image according to the present invention is as follows.

In the above-described first resolution method of the microscope image, the variable magnification procedure forms an image of the linear pattern included in the observation area of the target on the image sensor as the image having a width corresponding to two pixels or more.

## BRIEF DESCRIPTION OF THE DRAWINGS

Fig. 1 is a view illustrating an embodiment of a microscope device according to the present invention.

Figs. 2 are charts each illustrating an enhance resolution effect in an enhanced pictorial image.

Figs. 3 are views each depicting examples of an edge enhance filter.

Figs. 4 are charts (1) each illustrating a relation between a line width and an enhance resolution effect in an enhanced pictorial image.

Figs. 5 are charts (2) each illustrating a relation between a line width and an enhance resolution effect in an enhanced pictorial image.

Figs. 6 are views each illustrating a relation between a width of an image of a line pattern and a matrix size of the edge enhance filter.

Figs. 7 are views each illustrating a relation between a width of an image of a line pattern and a matrix size of the edge enhance filter.

Fig. 8 is a chart illustrating effects of image enhancement processing by edge enhancement.

Fig. 9 is a view illustrating an embodiment of a wafer inspection apparatus according to the present invention.

Fig. 10 is a flowchart illustrating a wafer inspection operation.

Fig. 11 is a flowchart illustrating another wafer inspection operation.

Figs. 12 are charts each illustrating effects of an averaging filter.

## BEST MODE FOR CARRYING OUT THE INVENTION

Hereinafter, embodiments of the present invention will be described in detail based on the drawings.

Example 1

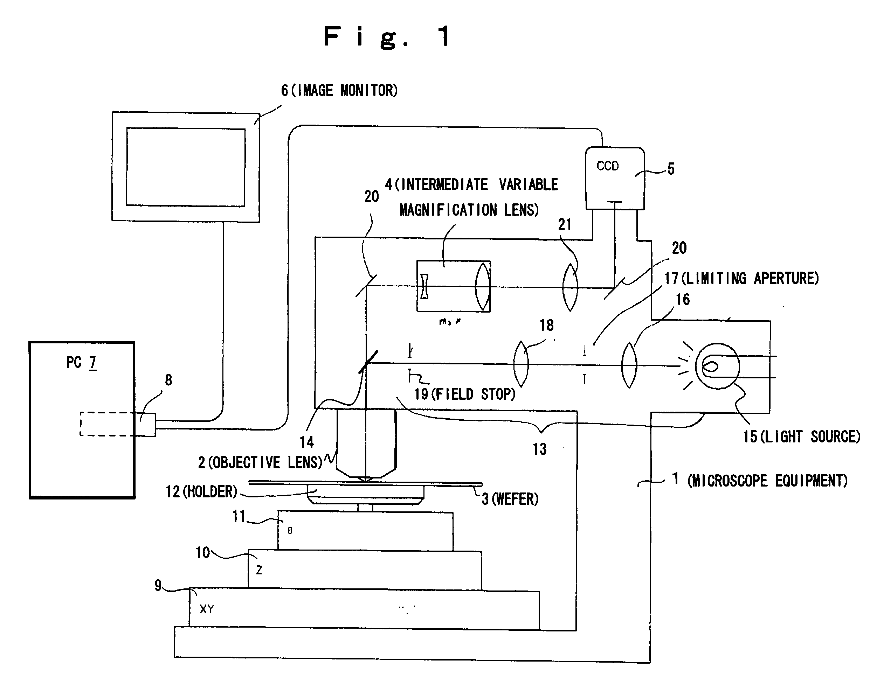

Fig. 1 depicts an embodiment of a microscope device according to the present invention.

A microscope equipment 1 of a microscope device represented in Fig. 1 includes an objective lens 2 with a magnification $m_1$. The microscope equipment 1 further includes a positioning device including an XY stage 9, a Z stage 10, and a rotation stage 11. On a holder 12 provided on the positioning device, a specimen 3 such as a wafer is placed, and on a surface of the specimen 3, linear patterns, for example, with a width $d_1$ formed at an interval $d_1$ are formed.

Further, in an illumination optical system 13 illustrated in Fig. 1, light radiated from a light source 15 such as, for example a halogen lamp is turned into a substantially parallel beam of lights by a collector lens 16, and is led to the objective lens 2 via a limiting aperture 17, a relay lens 18, a field stop 19, and a half mirror 14, so that an image of the limiting aperture 17 is projected on the surface of the specimen 3.

Thus the specimen 3 is illuminated and the reflected light on the surface of the specimen 3 is led onto an image sensor 5 such as a CCD by an imaging optics including the objective lens 2, the half mirror 14, a mirror 20, an intermediate variable magnification lens 4 with a magnification $m_2$, an imaging lens 21, and so on, so that images of the aforesaid linear patterns formed on the surface of the specimen 3 are formed on the image sensor 5.

In Fig. 1, the linear patterns with the width $d_1$ on the wafer which is placed as an example of the specimen 3 on the holder 12 are magnified/projected on the image sensor 5 at a total projection magnification m which is a product of the magnification $m_1$ of the objective lens 2 and the magnification $m_2$ of the intermediate variable magnification lens 4, and are captured by the image sensor 5 as linear patterns having a width equal to a width $d_1 \times m$. Then, when the image sensor 5 is a CCD with a pixel size a, the aforesaid linear patterns are captured on image data obtained by the CCD, as pictorial images having a width equal to the width $d_1 \times m$ of the patterns on the CCD divided by the pixel size a.

The image data thus obtained by the image sensor 5 is subjected to display processing by a monitor device 6 and at the same time, is sent to a personal computer 7 to be subjected to later-described image processing by an image processing unit 8 included in the personal computer 7.

Hereinafter, the image processing by the image processing unit 8 and an enhanced pictorial image resulting from the image processing will be described.

Ignoring the limit of resolution due to an influence of diffraction in the microscope optical system is not taken into consideration, when a linear pattern, for example, with an 80 nm line width on a wafer is magnified/projected at a projection image magnification of 400x on a CCD with each pixel sized 8 $\mu$m , this linear pattern is captured on the CCD as an pictorial image of a four-pixel width.

However, in an actual microscope optical system, when the interval $d_1$ of the linear patterns of the target of observation is equal to or less than Rayleigh limit expressed by the aforesaid expression (1), the linear patterns cannot be resolved in an untreated pictorial image representing intensity distribution of the image projected on the CCD, regardless of the magnitude of the projection magnification.

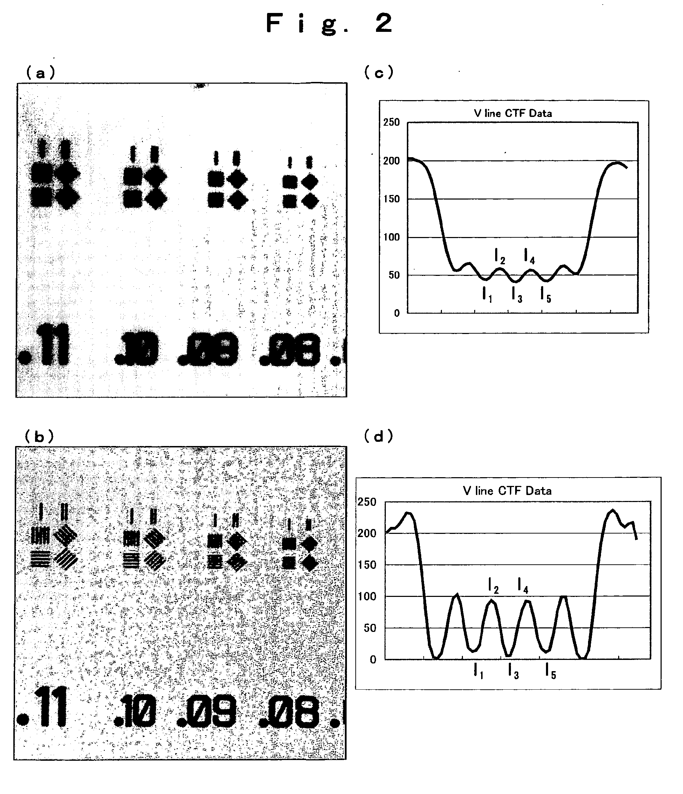

Fig. 2(a) depicts an example of a pictorial image which is obtained when line-and-space patterns in which linear patterns with widths of 110 nm, 100 nm, 90 nm, and 80 nm respectively are arranged at an equal interval are magnified/projected on the CCD by the objective lens with a 0.9 NA by using ultraviolet light with a 248 nm wavelength as illumination light.

It is seen from the example depicted in Fig. 2 (a) that, as for the line-and-space pattern of 90 nm which is slightly larger than the optical resolution under the aforesaid condition, the line patterns and a space which is the interval therebetween are barely distinguishable, but as for the 80 nm line-and-space pattern whose center distance between the linear patterns is equal to or less than the optical resolution, the line patterns and a space are not distinguishable at all.

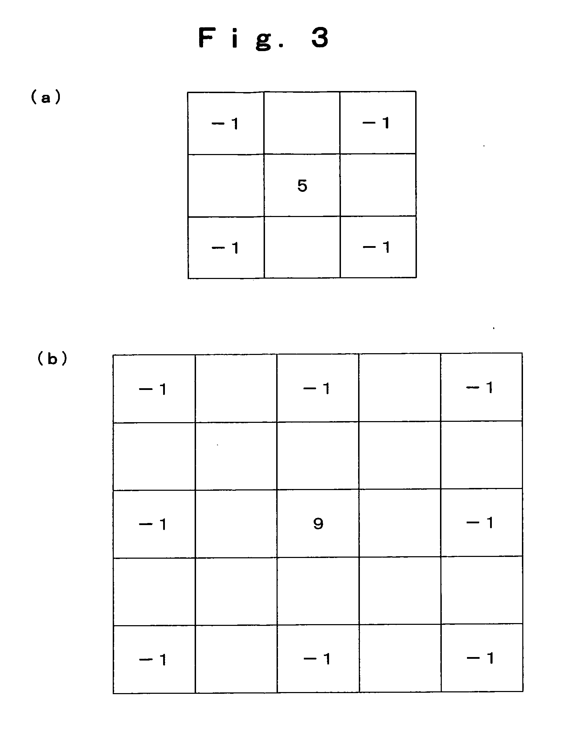

The image processing unit 8 represented in Fig. 1 applies, to such untreated image data, a Laplacian filter represented by a $3 \times 3$ matrix or a $5 \times 5$ matrix as represented in Figs. 3(a) and 3(b) to perform edge enhance processing.

Fig. 2(b) depicts an enhanced pictorial image resulting from the edge enhance processing in which the microscope device represented in Fig. 1 by using the aforesaid $5 \times 5$ matrix Laplacian filter to a pictorial image which is obtained when line-and-space patterns equivalent to those of the example in Fig. 2(a) are projected on the CCD at a total projection magnification of 400x.

In Fig. 2(b), not only the line-and-space pattern of 90 nm close to the optical resolution is resolved with a sufficiently high contract but also the line-and-space pattern of 80 nm which is equal to or less than the optical resolution is resolved up to better extent that the individual line patterns and the space are distinguishable.

This is apparent from profiles represented in Figs. 2(c) and (d).

Figs. 2(c) and (d) represent vertical-direction intensity distribution in image data corresponding to the 90nm line-and-space, in Figs. 2(a) and (b), arranged of linear patterns in the horizontal direction. In either of the profiles, an interval between peaks of the intensity distribution is a 9-pixel interval corresponding to 180 nm which is a center interval of the line patterns, and it is apparent that each of the line patterns of the line patterns barely resolved in the untreated pictorial image corresponds to the intensity distribution in the enhanced pictorial image. In the enhanced pictorial image, a CTF value which is an example of an index indicating the magnitude of contrast is given as 0.35 when the expression (2) is calculated by substituting an average value $I_{min}$ of intensity values ($I_1$, $I_3$, $I_5$) corresponding to three valleys appearing in a center portion of the profile and an average value $I_{max}$ of intensity values ($I_4$, $I_5$) corresponding to two peaks appearing therein, and thus it is seen that the contrast is greatly improved compared with CTF = 0.05 similarly calculated for the untreated pictorial image.

$$CTF = (I_{max} - I_{min})/(I_{max} + I_{min}) \quad \dots (2)$$

By thus applying appropriate edge enhance processing to the untreated pictorial image, it is possible to obtain an enhanced pictorial image in which a line-and-space pattern that cannot be resolved in the untreated pictorial image, that is, a line-and-space having an interval equal to or less than the optical resolution, is resolved.

A possible reason that such an enhance resolution effect in the enhanced pictorial image can be obtained is that, when the width of the line pattern on the CCD and the size of the filter matrix for the edge enhancement satisfy an appropriate relation, the effect of the edge enhancement is synthesized as part of an image of the line pattern itself, whereby a high-contrast image is formed.

In order to specify the condition to be satisfied for obtaining the enhance resolution effect in an enhanced pictorial image, the present applicant conducted experiments in which line-and-space patterns having various line widths were magnified/projected on the CCD by the microscope device represented in Fig. 1 and the Laplacian filter represented by a $5 \times 5$ matrix was applied to the resultant image data to generate an enhanced pictorial image.

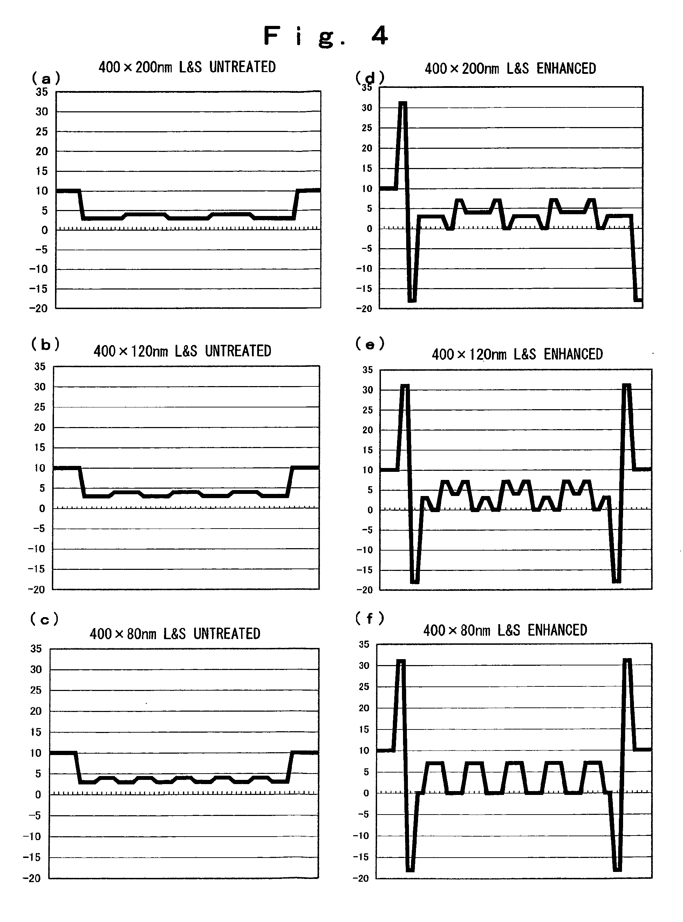

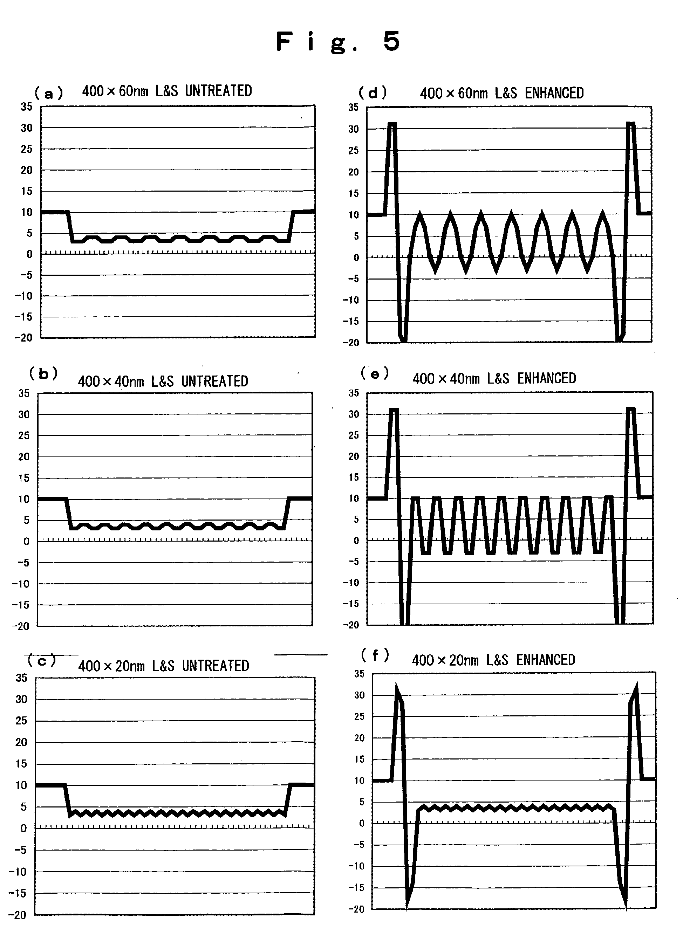

Figs. 4(a), (b), and (c) represent profiles of untreated image data corresponding to line-and-space patterns with the line widths of 200 nm, 120 m, and 80 nm respectively, and Figs. 4(d), (e), and (f) represent profiles of enhanced pictorial image data corresponding to these untreated image data. Similarly, Figs. 5(a), (b), and (c) represent profiles of untreated image data corresponding to line-and-space patterns with the line widths of 60 nm, 40 nm, 20 nm respectively and Figs. 5(d), (e), and (f) represent profiles of enhanced pictorial image data corresponding to these untreated image data.

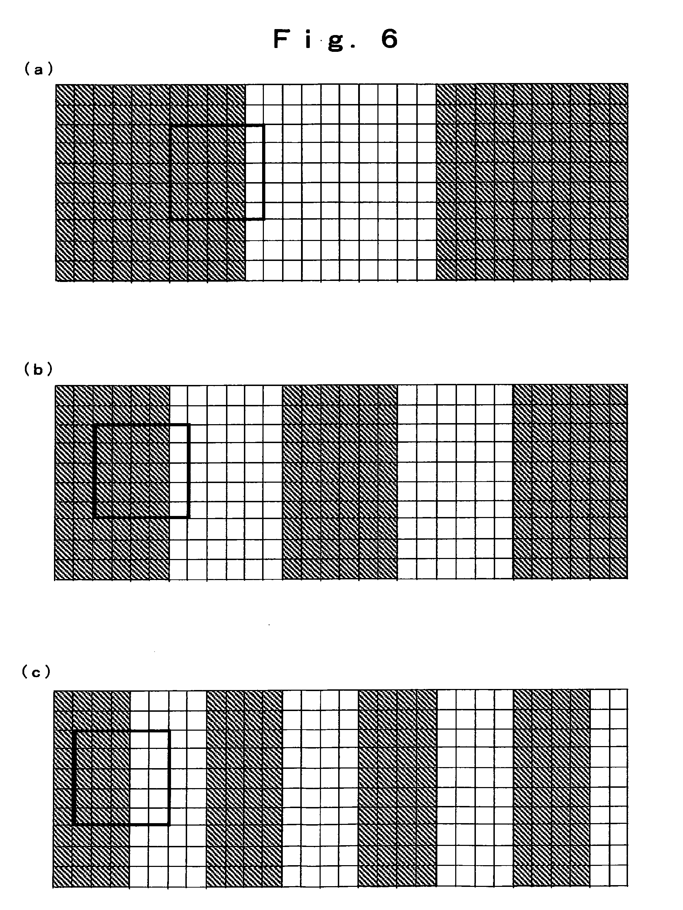

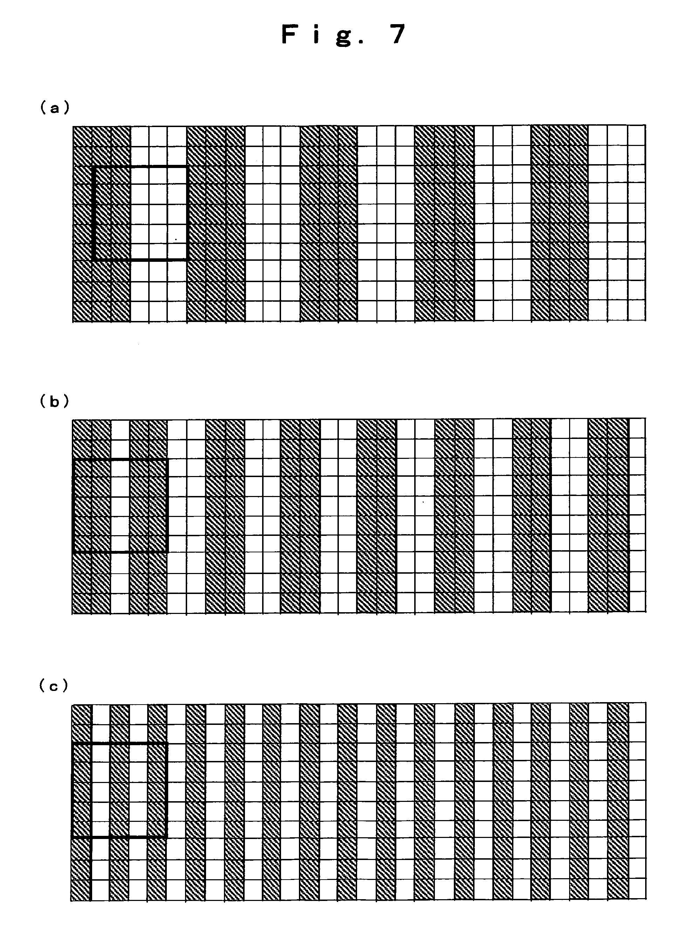

Further, Figs. 6 and Figs. 7 each represents a relation between the width of an image of the line pattern projected on the CCD and the matrix size of the edge enhance filter, regarding line patterns forming each of the line-and-space patterns represented in Figs. 4 and Figs. 5.

When, as represented in Figs. 6(a) and (b), the width of the image of the line pattern projected on the CCD (10 pixels and 6 pixels respectively) is more than 5 pixels which is the matrix size of the edge enhance filter, it is seen from Figs. 4(d) and (e) that an intensity alteration corresponding to the line pattern and an intensity alteration due to the edge enhancement effect appear separately and thus an effect of visibility improvement of the line pattern owing to the edge enhancement effect is confirmed.

Also, when, as represented in Fig. 6(c), Figs. 7 (a), and (b), the width of the image of the line pattern (4 pixels, 3 pixels, and 2 pixels respectively) projected on the CCD is equal to or less than the matrix size of the edge enhance filter, it is seen from Fig. 4(f), Figs. 5(d), and (e) that an intensity alteration corresponding to the line pattern and an intensity alteration due to the edge enhancement effect are synthesized and thus a contrast increasing effect is exhibited.

On the other hand, when, as represented in Fig. 7(c), the width of the image of the line pattern projected on the CCD is 1 pixel, it is seen from Fig. 5(f) that only the edge enhancement effect in the vicinity of the line patterns appears and the contrast increasing effect disappears. A possible reason that even the application of the edge enhance processing cannot produce the contrast increasing effect when the line width of the line pattern image projected on the CCD is equal to or less than 1 pixel as in this case is that it is not possible to distinguish information regarding the line-and-space included in the image data from a noise generated in quantization processing and the like.

Based on these results, as a condition to be satisfied for obtaining the enhance resolution effect in an enhanced pictorial image, the present applicant derived the condition expressed by the expression (3) by using the total projection magnification m of the microscope device, the line width d of a target of observation, the pixel size a of the image sensor (CCD), and the matrix size s of the edge enhance filter.

$$1 < m \times d/a \le s \quad \dots (3)$$

That is, by using a microscope device whose total projection magnification m is appropriately set as represented by the above expression (3) in relation to the line width d of the target of observation and the image sensor with each pixel sized for observation and applying an edge enhance filter of the matrix size s, it is possible to observe, with a high contrast, a line-and-space pattern having a thinner line width than the optical resolution determined by the wavelength of illumination light and NA of an objective lens.

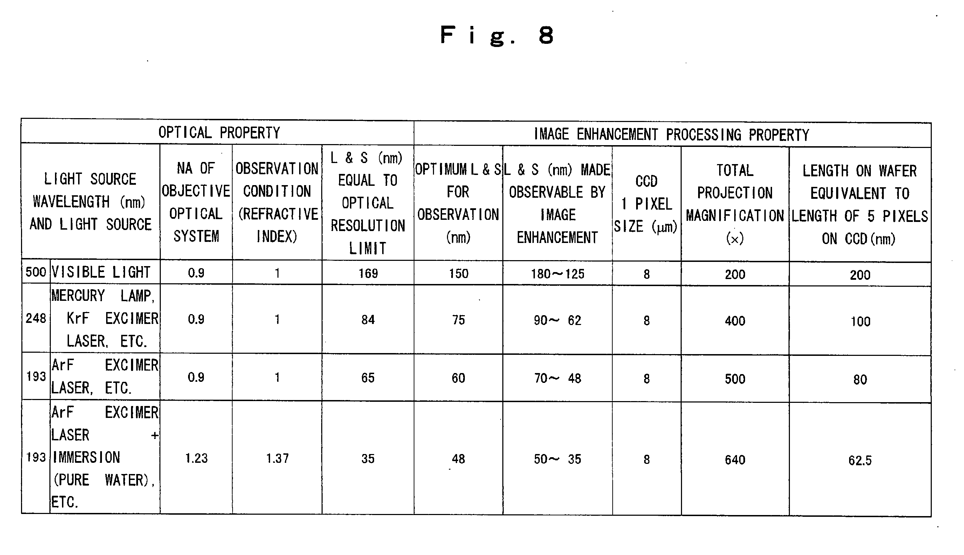

Fig. 8 represents the total projection magnification m of the microscope device, a line-and-space (L & S) pattern suitable for observation, and an effect of the image enhancement processing by the edge enhancement when a CCD having rectangular photoelectric transferring elements with an 8 $\mu$m pixel size arranged in a tessellated manner is used as the image sensor and a Laplacian filter with a 5 $\times$ 5 matrix size is used as the edge enhance filter.

As represented in Fig. 8, in the observation with visible light, for instance, when the total projection magnification is set to 200x, a matrix with 5 $\times$ 5 pixels (one pixel size: 8 $\mu$m $\times$ 8 $\mu$m) corresponds to a range of 200 nm $\times$ 200 nm on a target of observation (wafer). That is, the edge enhance processing is effective to a line-and-space smaller than 200 nm, and in a line-and-space up to a size (1 50 nm) corresponding to about 75 percent of one side of the aforesaid matrix, a good CTF value is obtained. Under this condition, a resolved image is obtained for a line-and-space smaller than 1 50 nm, but a CTF value gradually becomes smaller, and for a line-and-space smaller than 125 nm, a resolved image is not obtained.

A light source needs to be selected according to a line-and-space (L & S) of a target of observation, but as represented in Fig. 8, by applying the image enhancement processing, it is possible to obtain resolution beyond an ordinary optical limiting resolution with any light source. For example, even when an ArF excimer laser is used as a light source and NA is improved to 1.23 by immersion (pure water) of an objective lens, a conventional optical system cannot produce a resolved image of a 35 nm line-and-space due to the restriction by the optical limiting resolution, but with the microscope device according to the present invention, it is theoretically possible to observe such a line-and-space with the same light source and objective lens (immersed) by using the total projection magnification of 640x and applying the aforesaid image enhancement processing. Further, in the conventional method, in order to observe a 70 nm line-and-space, the use of an expensive ArF excimer laser as a light source is required, but with the microscope device according to the present invention, by applying the image enhancement processing to an image obtained by an optical system using an inexpensive mercury lamp as a light source (248 nm wavelength), the observation is theoretically possible.

Further, since it is generally difficult to manufacture an optical member such as an objective lens exactly as a design value, it is generally difficult to obtain theoretical resolution. However, in determining the optimum line-and-spaces (L & S) for observation represented in Fig. 8, an allowance is given to a range of the line-and-space which is made observable by the image enhancement processing, and therefore, even if an optical member has a small manufacturing error, the application of the image enhancement processing makes it possible to obtain a resolved image of a target of observation substantially equal to the optimum L & S for observation. Consequently, it is possible to reduce manufacturing cost of individual optical members forming an optical system for observation.

In addition, as the edge enhance filter for enhancing a pictorial image obtained by the CCD, the Laplacian filter with a 3 x3 matrix as represented in Fig. 3(a) is also usable, for instance. Further, in the application only requiring the confirmation of only the line width in the line-and-space pattern, a filter having only a differential function is usable.

Further, instead of a typical CCD, an image sensor having honeycomb-arranged elements is usable. The use of such an image sensor has a possibility of producing a higher enhancing effect, and for example, even under a condition where one line pattern forming a line-and-space pattern has a width close to one pixel on the image sensor, a sufficient image enhancing effect is expected.

Example 2

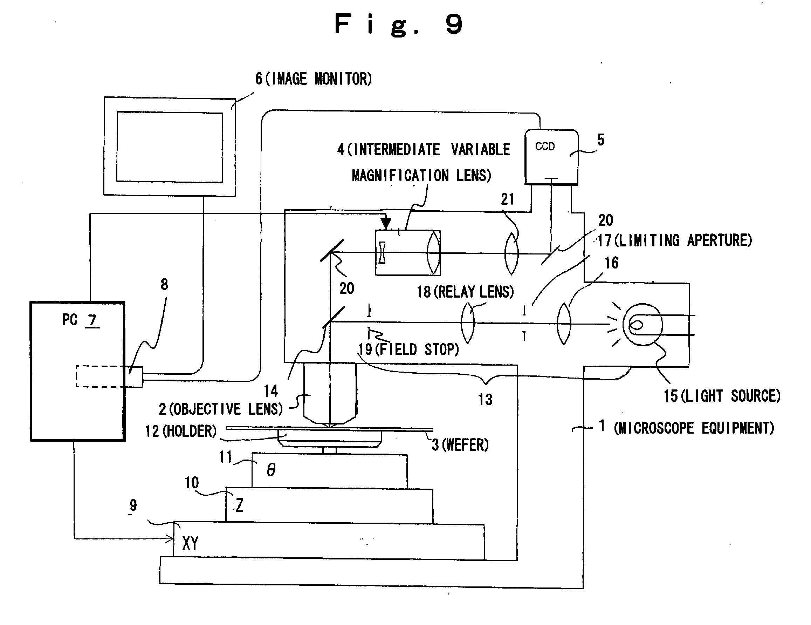

Fig. 9 represents an embodiment of a wafer inspection apparatus to which the microscope device according to the present invention is applied.

Among constituent elements represented in Fig. 9, those equivalent to the parts represented in Fig. 1 will be denoted by the reference numerals represented in Fig. 1, and description thereof will be omitted.

The personal computer 7 represented in Fig. 9 sets a desired magnification within a variable range of the intermediate variable magnification lens 4 by controlling the lens activating mechanism (not represented) which varies the magnification of the intermediate variable magnification lens 4.

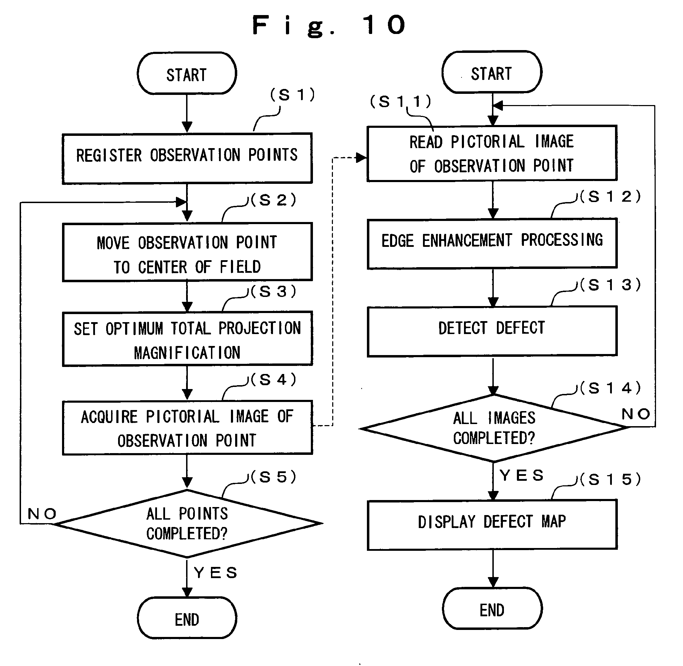

Fig. 10 represents an example of a flowchart representing a wafer inspection operation by the wafer inspection apparatus represented in Fig. 9.

In the example represented in Fig. 10, based on information regarding a circuit pattern formed on, for example, a wafer, at least one observation point as an inspection target is decided in advance, and coordinates of these observation points on the wafer are input via an input device such as a keyboard (not represented) included in the personal computer 7 and are registered in a memory or the like in the personal computer 7 (Step S1). Further, at this time, based on line widths, at these observation points, of the circuit pattern captured in a field of view of the objective lens 2, total projection magnifications satisfying the condition of the aforesaid expression (3) are calculated, and the found total projection magnifications are registered in correspondence to the respective observation points.

Next, the personal computer 7 sequentially reads registration information regarding each of the observation points from the information registered in the above-described manner, adjusts the XY stage and so on included in the positioning device based on the registration information to move the designated coordinates on the wafer 3 to a center portion of the field of view of the objective lens 2 (Step S2).

Thereafter, based on the total projection magnification which is read at Step S2 together with the coordinates of the observation point, the personal computer 7 adjusts the magnification of the intermediate variable magnification lens 4, and sets the optimum projection magnification for an image of the observation point projected on the CCD 5 (Step S3).

After the optimum projection magnification is thus set, a magnified/projected image of the observation point is obtained through appropriate focusing controlling (Step S4), and the obtained magnified/projected image is once stored in a memory device such as a hard disk (not represented) included in the personal computer 7 and thereafter is subjected to image analysis processing at Step S11 to Step S15.

Every time the magnified/projected image of each observation point is obtained in the above-described manner, the personal computer 7 determines whether or not the acquisition of images of all the observation points has been completed (Step S5), and if the determination turns out to be NO, returns to Step S2 to start the image acquisition processing regarding a new observation point.

When the acquisition of the magnified/projected images corresponding to all the observation points registered at Step S1 described above has been thus completed, the personal computer 7 finishes the image acquisition processing as YES determination at Step S5.

Next, the image analysis processing will be described.

The image processing unit 8 included in the personal computer 7 reads the magnified/projected image corresponding to each observation point, which has been saved in the aforesaid image acquisition processing (Step S11), and performs edge enhance processing by applying an appropriate edge enhance filter (for example, a Laplacian filter with a $5 \times 5$ matrix) (Step S12).

As described above, in the edge enhanced pictorial image obtained at Step S12, the circuit pattern formed at the observation point on the wafer 3 is resolved with a high contrast, and therefore, when this edge enhanced pictorial image is displayed on the image monitor 6 and a picture of the circuit pattern appeared in this edge enhanced pictorial image is provided to a defect detection work by an operator, it is possible at Step S13 to surely detect a defect such as an imperceptible defect of the circuit pattern based on the edge enhanced pictorial image.

Every time the edge enhance processing and the defect detection processing regarding each observation point are thus finished, the personal computer determines whether or not the image analysis processing for the magnified/projected images corresponding to all the observation points has been completed (Step S14). When there still remains any unprocessed magnified/projected image, the personal computer makes NO determination at Step S14 and returns to Step S11 to read the magnified/projected image corresponding to the next observation point and performs the image analysis processing for this magnified/projected image.

When the processing for the magnified/projected images corresponding to all the observation points is finished in the above-described manner (YES determination at Step S14), the personal computer 7 creates a defect map which displays, for example, information specifying the positions, on the wafer, of the observation points where the defects are detected at the aforesaid Step S13 and information regarding the detected defects, and displays the defect map on the image monitor 6 for use by the operator (Step S15), and then finishes the image analysis processing.

In this manner, an enhance resolution effect in the enhanced pictorial images resulting from such application of the edge enhance filter to the magnified/projected images is applicable to the inspection of the circuit pattern formed on the wafer.

Incidentally, the magnified/projected image obtained at Step S4 represented in Fig. 10 may be immediately subjected to the edge enhance processing and the defect detection processing.

Further, the defect inspection utilizing the enhance resolution effect in the enhanced pictorial image may be conducted for an observation point arbitrarily extracted by the operator.

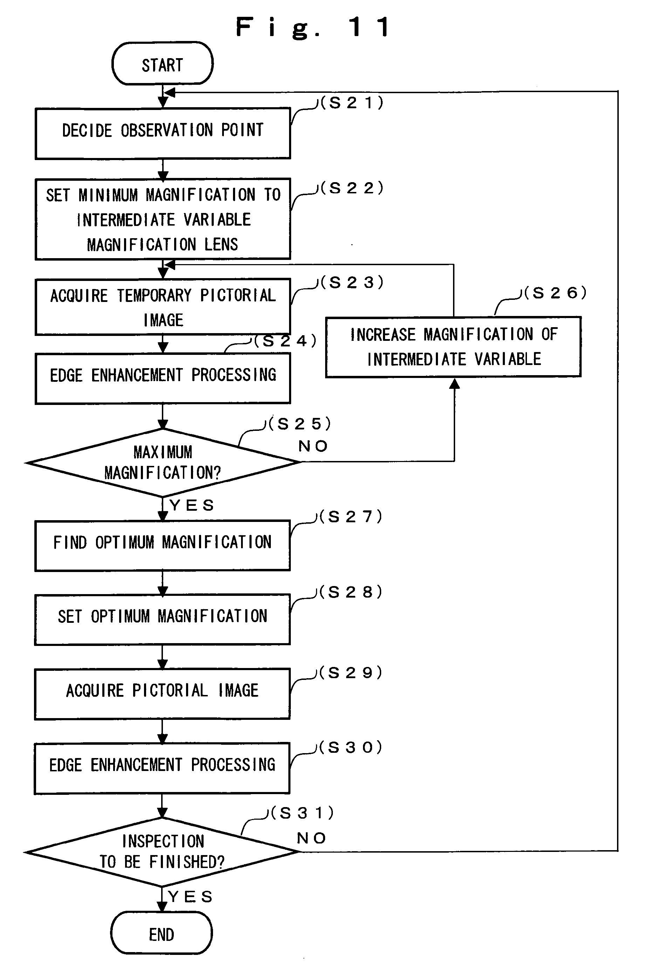

Fig. 11 represents a flowchart representing another wafer inspection operation by the wafer inspection apparatus represented in Fig. 9.

In the wafer inspection operation represented in Fig. 11, when an arbitrary point on the wafer 3 is decided as the observation point by, for example, the operator at Step S21, the personal computer 7 sets the magnification of the intermediate variable magnification lens 4 included in the microscope device to the minimum magnification (Step S22).

Next, the personal computer 7 temporarily obtains a magnified/projected image from the CCD 5 via the image processing unit 8 (Step S23), and applies the edge enhance processing to the obtained temporary pictorial image (Step S24). At this time, based on an appropriate line profile included in an enhanced pictorial image obtained by the image processing unit 8, the personal computer 7 calculates a contrast value explained in Figs. 2, as an index indicating the degree of the enhance resolution effect in the obtained enhanced pictorial image corresponding to the aforesaid temporary pictorial image, and stores the contrast value in correspondence to the set magnification of the intermediate variable magnification lens 4.

Thereafter, the personal computer 7 determines whether or not the current magnification of the intermediate variable magnification lens 4 is the maximum value in the variable range (Step S25), and if the determination turns out to be NO, sets the magnification of the intermediate variable magnification lens 4 to a value, for example, 10% larger than the current magnification (Step S26), and thereafter, returns to Step S23 to repeat the acquisition of a temporary pictorial image.

By comparing the contrast values thus obtained in the enhanced pictorial images corresponding to the respective temporary pictorial images which are obtained while the magnification of the intermediate variable magnification lens 4 is increased, the personal computer 7 finds the optimum magnification of the intermediate variable magnification lens 4 (Step S27).

Based on this found result, the personal computer 7 sets, for example, the magnification of the intermediate variable magnification lens 4 giving the highest contrast value, as the optimum magnification (Step S28), and obtains, as a pictorial image for inspection, a pictorial image which is magnified/projected on the CCD 5 by using this optimum magnification (Step S29), and then newly applies the edge enhance processing to this image to save the enhanced pictorial image as an image for defect inspection (Step S30).

Every time the image for defect detection is thus obtained regarding the observation point designated by the operator, the personal computer 7 inquires the operator whether or not to finish the inspection (Step S31), and when instructed to continue the inspection, it returns to Step S21 as NO determination at Step S31 to start the processing for a new observation point.

On the other hand, when it is instructed to finish the inspection (YES determination at Step S31), the processing for obtaining the image for defect detection is finished, and the saved image for defect detection is subjected to the defect inspection processing.

Incidentally, in the edge enhanced pictorial image, a noise component generated due to a quantization error or the like in the CCD 5 is intensified in accordance with the effect of high-contrast resolution of the line pattern to be sensed, as represented in Fig. 2(b).

Such an intensified noise component can be alleviated by the application of, for example, an averaging filter represented by a $3 \times 3$ matrix to the enhanced pictorial image.

To obtain the noise alleviating effect, it is effective to apply an averaging filter with a smaller matrix size than a matrix size of the edge enhance filter applied in the edge enhance processing.

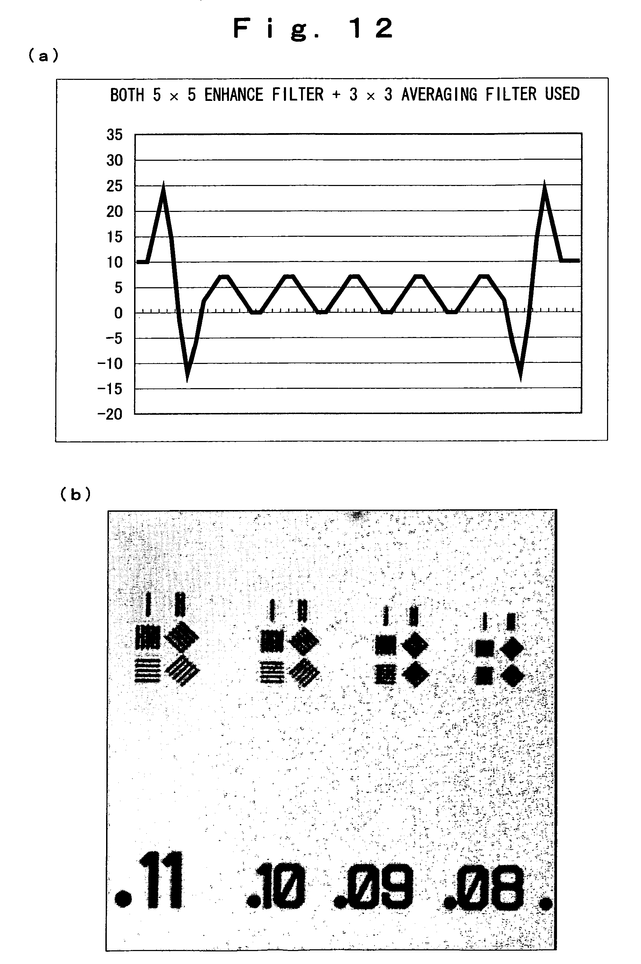

Fig. 12(b) represents an example of a pictorial image obtained when the aforesaid averaging filter is applied to the edge enhanced pictorial image represented in Fig. 2(b) to suppress the noise component appearing in the enhanced pictorial image, and Fig. 12(a) represents a profile equivalent to that in Fig. 4(f).

It is seen from Fig. 1 2(a) that even after the application of the averaging filter, there is no alteration in contrast of the line-and-space pattern appearing in the enhanced pictorial image, and as is apparent from Fig. 12(b), the line-and-space pattern with a 80 nm line width is clearly resolved.

On the other hand, it is seen in Fig. 12(a) that patterns appearing on both sides of the line-and-space pattern as a result of the edge enhancement are blunted, and it is seen in Fig. 12(b) that a noise on a screen conspicuously appearing in Fig. 2(b) is greatly alleviated.

In this embodiment, the line-and-space spikes is used as an example, but the same effect is obtained for a specimen in a contact hole shape. Further, the arrangement of the photoelectric transferring elements is not limited to the tessellated arrangement, and the pixels may be honeycomb-arranged or pixel shifting may be made.

## INDUSTRIAL APPLICABILITY

With the microscope device according to the present invention, it is possible to obtain an edge enhanced pictorial image in which a microscopic pattern beyond the optical resolution derived from NA of the objective lens and the wavelength of illumination light of the microscope device can be resolved, and to use the enhanced pictorial image for observation.

Similarly, in the resolution method of the microscope device according to the present invention, it is possible to obtain an edge enhanced pictorial image in which a microscopic pattern beyond the optical resolution derived from NA of the objective lens and the wavelength of illumination light of the microscope device can be resolved, and to use the enhanced pictorial image in the observation and inspection of an object having the aforesaid microscopic pattern.

As has been described above, according to the microscope device of the present invention, regardless of the optical resolution limited by the wavelength of the light source, NA of the objective lens, and the like, it is possible to obtain an enhanced pictorial image in which a target of observation such as a microscopic circuit pattern formed on a wafer can be clearly resolved.

Therefore, it is greatly effective in fields observing microscopic patterns, such as a wafer defect inspection field in semiconductor manufacturing fields.

## Claims

1. A microscope device comprising:

an image sensor having a plurality of pixels;
an enlarging optical system forming a magnified image of at least part of a target of observation on the pixels of the image sensor; and
an image processor applying an edge enhance filter having a differential function to a pictorial image obtained by the image sensor to obtain an edge enhanced pictorial image corresponding to the pictorial image, wherein
the enlarging optical system includes a variable magnification optical system forming an image of a linear pattern included in an observation area of the target of observation, as the image having a width that exceeds a size of each of the pixels included in the image sensor and that is equal to or less than a width of an area handled by the edge enhance filter.

2. The microscope device according to claim 1, wherein the variable magnification optical system forms an image of the linear pattern included in the observation area of the target of observation on the image sensor as the image having a width corresponding to two pixels or more.

3. The microscope device according to claim 1, wherein the image processor applies the edge enhance filter having an effect of reflecting distribution of pixel values in the pictorial image as well as having the differential function to the pictorial image obtained by the image sensor.

4. The microscope device according to claim 3, wherein the image processor includes an averaging processor averaging results of enhancement by the edge enhance filter by using an averaging matrix which is smaller in size than a matrix for the edge enhance filter.

5. A resolution method of a microscope image comprising:

a magnified image forming procedure forming a magnified image of at least part of a target of observation, on a photoelectric transferring surface of the image sensor on which a plurality of photoelectric transferring elements are disposed by an enlarging optical system; and
an image processing procedure of applying an edge enhance filter having a differential function to a pictorial image obtained by the image sensor to obtain an edge enhanced pictorial image corresponding to the pictorial image, wherein
the magnified image forming procedure includes a variable magnification procedure forming an image of a linear pattern included in an observation area of the target of observation as the image having a width that exceeds a size of each of pixels corresponding to the photoelectric transferring elements included in the image sensor and that is equal to or less than a width of an area handled by the edge enhance filter.

6. The resolution method of the microscope image according to claim 5, wherein
the variable magnification procedure forms an image of the linear pattern included in the observation area of the target of observation on the image sensor, as the image having a width corresponding to two pixels or more.

Fig. 1

6 (IMAGE MONITOR)

CCD 5

20   4 (INTERMEDIATE VARIABLE MAGNIFICATION LENS)

21

20

17 (LIMITING APERTURE)

16

18

PC 7

8

19 (FIELD STOP)

15 (LIGHT SOURCE)

14

13

2 (OBJECTIVE LENS)

12 (HOLDER)

3 (WEFER)

1 (MICROSCOPE EQUIPMENT)

11   B

10   Z

9   XY

EP 2 077 462 A1

# Fig. 2

( a )

( c )

( b )

( d )

# F i g. 3

(a)

| | | |
|---|---|---|
| -1 | | -1 |
| | 5 | |
| -1 | | -1 |

(b)

| | | | | |
|---|---|---|---|---|
| -1 | | -1 | | -1 |
| | | | | |
| -1 | | 9 | | -1 |
| | | | | |
| -1 | | -1 | | -1 |

# F i g . 4

(a) 400 × 200nm L&S UNTREATED

(d) 400 × 200nm L&S ENHANCED

(b) 400 × 120nm L&S UNTREATED

(e) 400 × 120nm L&S ENHANCED

(c) 400 × 80nm L&S UNTREATED

(f) 400 × 80nm L&S ENHANCED

# Fig. 5

(a) 400 × 60nm L&S UNTREATED

(d) 400 × 60nm L&S ENHANCED

(b) 400 × 40nm L&S UNTREATED

(e) 400 × 40nm L&S ENHANCED

(c) 400 × 20nm L&S UNTREATED

(f) 400 × 20nm L&S ENHANCED

# F i g. 6

(a)

(b)

(c)

# Fig. 7

(a)

(b)

(c)

| OPTICAL PROPERTY | | | | IMAGE ENHANCEMENT PROCESSING PROPERTY | | | | |
|---|---|---|---|---|---|---|---|---|
| LIGHT SOURCE WAVELENGTH (nm) AND LIGHT SOURCE | NA OF OBJECTIVE OPTICAL SYSTEM | OBSERVATION CONDITION (REFRACTIVE INDEX) | L & S (nm) EQUAL TO OPTICAL RESOLUTION LIMIT | OPTIMUM L & S FOR OBSERVATION (nm) | L & S (nm) MADE OBSERVABLE BY IMAGE ENHANCEMENT | CCD 1 PIXEL SIZE (μm) | TOTAL PROJECTION MAGNIFICATION (×) | LENGTH ON WAFER EQUIVALENT TO LENGTH OF 5 PIXELS ON CCD (nm) |
| 500 VISIBLE LIGHT | 0.9 | 1 | 169 | 150 | 180~125 | 8 | 200 | 200 |
| 248 MERCURY LAMP, KrF EXCIMER LASER, ETC. | 0.9 | 1 | 84 | 75 | 90~ 62 | 8 | 400 | 100 |
| 193 ArF EXCIMER LASER, ETC. | 0.9 | 1 | 65 | 60 | 70~ 48 | 8 | 500 | 80 |
| 193 ArF EXCIMER LASER + IMMERSION (PURE WATER), ETC. | 1.23 | 1.37 | 35 | 48 | 50~ 35 | 8 | 640 | 62.5 |

EP 2 077 462 A1

# Fig. 9

6 (IMAGE MONITOR)

4 (INTERMEDIATE VARIABLE MAGNIFICATION LENS)

CCD 5

21

20

17 (LIMITING APERTURE)

16

18 (RELAY LENS)

8

PC 7

20

19 (FIELD STOP)

15 (LIGHT SOURCE)

14

2 (OBJECTIVE LENS)

13

12 (HOLDER)

3 (WEFER)

1 (MICROSCOPE EQUIPMENT)

11   θ

10   Z

9

XY

EP 2 077 462 A1

# F i g . 1 0

```
        START                                          START
          │                                              │
          │ (S 1)              (S 1 1)                   │ ◄──────────┐
          ▼                       ▼                                   │
┌──────────────────────┐   ┌──────────────────────────┐              │
│ REGISTER OBSERVATION │   │   READ PICTORIAL IMAGE    │              │
│       POINTS         │   │    OF OBSERVATION POINT   │              │
└──────────────────────┘   └──────────────────────────┘              │
          │                              │ (S 1 2)                    │
          │ (S 2)                        ▼                            │
          ▼                 ┌──────────────────────────┐             │
┌──────────────────────┐    │ EDGE ENHANCEMENT PROCESSING│           │
│  MOVE OBSERVATION    │    └──────────────────────────┘             │
│  POINT TO CENTER     │                 │ (S 1 3)                   │
│     OF FIELD         │                 ▼                           │
└──────────────────────┘    ┌──────────────────────────┐            │
          │ (S 3)           │      DETECT DEFECT        │            │
          ▼                 └──────────────────────────┘            │
┌──────────────────────┐                │ (S 1 4)                   │
│ SET OPTIMUM TOTAL    │                 ▼                          │
│ PROJECTION           │            ◇ ALL IMAGES ◇ ──── NO ─────────┘
│ MAGNIFICATION        │            ◇ COMPLETED? ◇
└──────────────────────┘                │
          │ (S 4)                        │ YES  (S 1 5)
          ▼                              ▼
┌──────────────────────┐    ┌──────────────────────────┐
│ ACQUIRE PICTORIAL    │    │    DISPLAY DEFECT MAP     │
│ IMAGE OF OBSERVATION │    └──────────────────────────┘
│     POINT            │                 │
└──────────────────────┘                 ▼
          │ (S 5)                       END
          ▼
   ◇ ALL POINTS ◇ ── NO ──┐
   ◇ COMPLETED? ◇          │
          │                │
          │ YES            │
          ▼                │
        END                │
```

# F i g . 1 1

START

DECIDE OBSERVATION POINT $(S21)$

SET MINIMUM MAGNIFICATION TO INTERMEDIATE VARIABLE MAGNIFICATION LENS $(S22)$

ACQUIRE TEMPORARY PICTORIAL IMAGE $(S23)$

INCREASE MAGNIFICATION OF INTERMEDIATE VARIABLE $(S26)$

EDGE ENHANCEMENT PROCESSING $(S24)$

MAXIMUM MAGNIFICATION? $(S25)$ NO

YES

FIND OPTIMUM MAGNIFICATION $(S27)$

SET OPTIMUM MAGNIFICATION $(S28)$

ACQUIRE PICTORIAL IMAGE $(S29)$

EDGE ENHANCEMENT PROCESSING $(S30)$

INSPECTION TO BE FINISHED? $(S31)$ NO

YES

END

# Fig. 12

(a)

BOTH 5 × 5 ENHANCE FILTER + 3 × 3 AVERAGING FILTER USED

(b)

**INTERNATIONAL SEARCH REPORT**

International application No.

PCT/JP2007/001151

A. CLASSIFICATION OF SUBJECT MATTER
*G02B21/36*(2006.01)i, *G02B21/24*(2006.01)i, *G06T5/20*(2006.01)i, *H04N5/225* (2006.01)i

According to International Patent Classification (IPC) or to both national classification and IPC

B. FIELDS SEARCHED

Minimum documentation searched (classification system followed by classification symbols)
G02B21/36, G02B21/24, G06T5/20, H04N5/225

Documentation searched other than minimum documentation to the extent that such documents are included in the fields searched
Jitsuyo Shinan Koho       1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-292369 A  (Olympus Optical Co., Ltd.), 19 October, 2001 (19.10.01), Par. No. [0086] & US 2003/16301 A | 1-6 |

☐ Further documents are listed in the continuation of Box C.        ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>08 January, 2008 (08.01.08) | Date of mailing of the international search report<br>22 January, 2008 (22.01.08) |
|---|---|
| Name and mailing address of the ISA/<br>Japanese Patent Office | Authorized officer |
| Facsimile No. | Telephone No. |

Form PCT/ISA/210 (second sheet) (April 2007)